# EUROPEAN PATENT APPLICATION

(11) **EP 4 733 567 A1**
(43) Date of publication of application: **29.04.2026**
(21) Application number: 25202035.9
(22) Date of filing: 13.09.2025
(51) Int. Cl.: F02C 7/32, F02C 7/36, F02C 3/113

(54) **TRANSFER ASSEMBLY TO TRANSFER MECHANICAL POWER DURING OPERATION OF A TURBINE ENGINE**

(30) Priority: 22.10.2024 US 202463710162 P; 29.05.2025 US 202519222113
(71) Applicant: The Boeing Company, Arlington, VA 22202 (US)
(72) Inventor: DIRUSSO, Joseph M., Arlington, VA 22202 (US); BOUWER, Scott Hendrik, Arlington, VA 22202 (US); PRITT, Marshall Edward, Arlington, VA 22202 (US); MATHESON, Evelyn M., Arlington, VA 22202 (US)
(74) Representative: Bryn-Jacobsen, Caelia

(57) **Abstract**

A transfer assembly to transfer power within an aircraft. The transfer assembly includes a low pressure drive mechanism operatively connected to a low pressure spool, a high pressure drive mechanism operatively connected to the high pressure spool, an accessory drive mechanism operatively connected to the accessory, and a differential operatively connected to each of the low pressure drive mechanism, the high pressure drive mechanism, and the accessory drive mechanism. The differential is configured to operate in a first mode configured to transfer power from the accessory to one of the low pressure spool and the high pressure spool, a second mode configured to transfer power from one of the low pressure spool and the high pressure spool to the accessory, and a third mode configured to transfer power from the low pressure spool to the high pressure spool.

## Description

### TECHNOLOGICAL FIELD

The present disclosure relates generally to the field of turbine engines and, more specifically, to selectively transferring mechanical power during operation of the turbine engine.

### BACKGROUND

Various aircraft include turbine engines that provide thrust to propel the aircraft during flight. The engine includes a fan that provides a portion of the overall propulsion system thrust. The engine also includes an engine core that produces additional thrust by directing exhaust products in an aft direction. The engine core includes a compressor that includes multiple compressor sections such as a low pressure compressor section and a high pressure compressor section.

The engine is also connected to one or more accessories onboard the aircraft. The accessories provide various functions to operate the aircraft. One example includes a compressor that supplies air to the aircraft. Other examples of accessories include but are not limited to electrical generators, hydraulic pumps, starters, fuel pumps, and oil pumps.

The engine operates in different modes during the different phases of use of the aircraft. For example, the aircraft can operate in different modes during flight such as during climb, cruise, and descent. The aircraft can also operate in different modes prior to and after flight, such as when positioned at a gate during loading and/or unloading of passengers and/or cargo, and during taxiing to/from a runway.

During the different modes of operation, the aircraft has different power needs. The power to and from the engine and the one or more accessories should be configured to enable the aircraft to efficiently operate.

### SUMMARY

One aspect is directed to a transfer assembly to transfer power within an aircraft between a low pressure spool of an engine, a high pressure spool of an engine, and an accessory. The transfer assembly comprises a low pressure drive mechanism operatively connected to the low pressure spool, a high pressure drive mechanism operatively connected to the high pressure spool, an accessory drive mechanism operatively connected to the accessory, and a differential operatively connected to each of the low pressure drive mechanism, the high pressure drive mechanism, and the accessory drive mechanism. The differential is configured to operate in a first mode, a second mode, and a third mode with the first mode configured to transfer power from the accessory to one of the low pressure spool and the high pressure spool, the second mode configured to transfer power from one of the low pressure spool and the high pressure spool to the accessory, and the third mode configured to transfer power from the low pressure spool to the high pressure spool.

In another aspect, a clutch is positioned along the low pressure drive mechanism with the clutch configured to disconnect the low pressure drive mechanism and brake the differential during the first mode and the second mode.

In another aspect, the low pressure drive mechanism comprises the clutch positioned between a first shaft of the low pressure drive mechanism and a second shaft of the low pressure drive mechanism.

In another aspect, the accessory drive mechanism comprises a gearbox configured to operate with a first gear ratio in the first mode and a second gear ratio in the second mode with the first gear ratio being different than the second gear ratio.

In another aspect, the accessory drive mechanism comprises a first shaft that extends between the differential and the gearbox and a second shaft that extends between the differential and the accessory, wherein the first shaft and the second shaft are configured to rotate at different speeds.

In another aspect, the differential is configured to operate with different gear ratios between two of the first mode, the second mode, and the third mode.

In another aspect, a control unit 60 receives inputs regarding the operation of the transfer assembly and controls an operation of the differential.

In another aspect, each of the low pressure drive mechanism and the high pressure drive mechanism comprises a shaft with one or more sections.

In another aspect, one of the low pressure drive mechanism and the high pressure drive mechanism comprises a positioned gear ratio with the differential and the other comprises a negative gear ratio with the differential.

In another aspect, in the first mode the power is transferred from the accessory to the high pressure spool and in the second mode the power is transferred from the high pressure spool to the accessory.

In another aspect, the engine is one of a turbofan engine, a turboshaft engine, and an open rotor engine.

One aspect is directed to a transfer assembly to transfer power within an aircraft between an accessory and an engine. The transfer assembly comprises: a differential; a first drive shaft connected to the differential with a first gear ratio and configured to connect to a first spool of the engine; a second drive shaft connected to the differential with a second gear ratio and configured to connect to a second spool of the engine; and a third drive shaft connected to the differential and configured to connect to the accessory. The differential is configured to transfer power from the third drive shaft to one of the first drive shaft and the second drive shaft and to transfer power from one of the first drive shaft and the second drive shaft to the third drive shaft.

In another aspect, the first drive shaft comprises a first drive shaft section, a second drive shaft section, and a clutch operatively connected to each of the first drive shaft section and the second drive shaft section.

In another aspect, the clutch is configured to operate in one of three manners comprising: a connected mode to connect the first drive shaft section and the second drive shaft section; a neutral mode to enable the first drive shaft section and the second drive shaft section to rotate independently; or a braked mode to prevent rotation of the first drive shaft section and the second drive shaft section.

In another aspect, each of the first drive shaft, the second drive shaft, and the third drive shaft operate at different gear ratios.

In another aspect, the differential is further configured to transfer power from the drive shaft to the second drive shaft.

One aspect is directed to a method of transferring power between an engine and an accessory of an aircraft. The method comprises: operating a transfer assembly in a first mode of operation and transferring power from the accessory that is away from the transfer assembly to the engine; operating the transfer assembly in a second mode of operation and transferring power from the engine to the accessory; and operating the transfer assembly in a third mode of operation and transferring power from a first spool of the engine to a second spool of the engine.

In another aspect, the first spool of the engine comprises a low pressure spool and the second spool of the engine comprises a high pressure spool and the first mode of operation comprises transferring the power from the accessory to the high pressure spool.

In another aspect, the second mode of operation comprises transferring the power from the high pressure spool of the engine to the accessory.

In another aspect, the method comprises disconnecting a drive mechanism to the low pressure spool and braking a differential in the first mode of operation and the second mode of operation.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an aircraft.
Figure 2 is a side schematic view of a transfer assembly that is connected to a turbine engine and an accessory.
Figure 3 is a schematic diagram of a transfer assembly connected to spools of an engine and also connected to an accessory.
Figure 4 is a schematic diagram of a transfer assembly that interconnects and enables power transfer between the N1 spool, the N2 spool, and the accessory.
Figure 5 is a schematic diagram of a transfer assembly in a first mode of operation in which the accessory inputs power to the engine.
Figure 6 is a schematic diagram of a transfer assembly in a second mode of operation that transfers power from the engine to the accessory.
Figure 7 is a schematic diagram of a transfer assembly in a third mode of operation that transfers power from a low pressure spool of the engine to a high pressure spool of the engine.
Figure 8 is a flowchart diagram of a method of transferring power between an engine and an accessory of an aircraft.
Figure 9 is a schematic diagram of a control unit.

### DETAILED DESCRIPTION

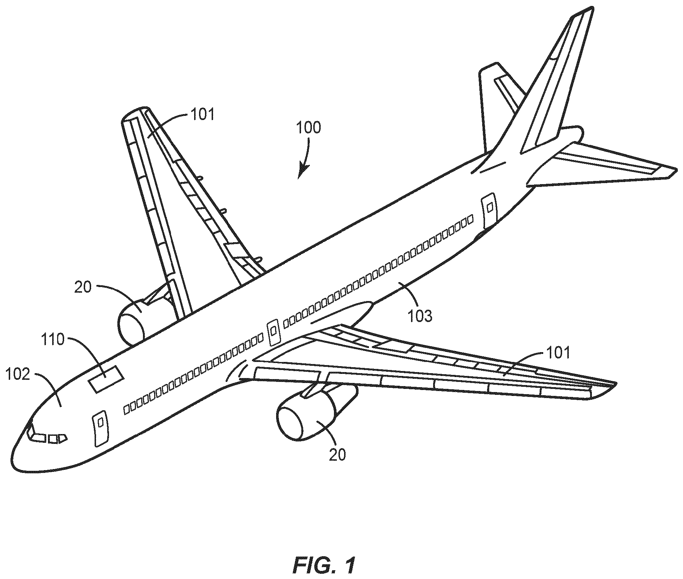

Figure 1 illustrates an example of an aircraft 100. The aircraft 100 generally includes a fuselage 103 and wings 101. One or more turbine engines 20 are mounted to the wings 101 to propel the aircraft 100. A flight deck 102 is positioned at the front of the fuselage 103 and includes controls that enable flight personnel to operate the aircraft 100. A rearward section of the fuselage 103 includes a cabin area configured to accommodate passengers and/or cargo.

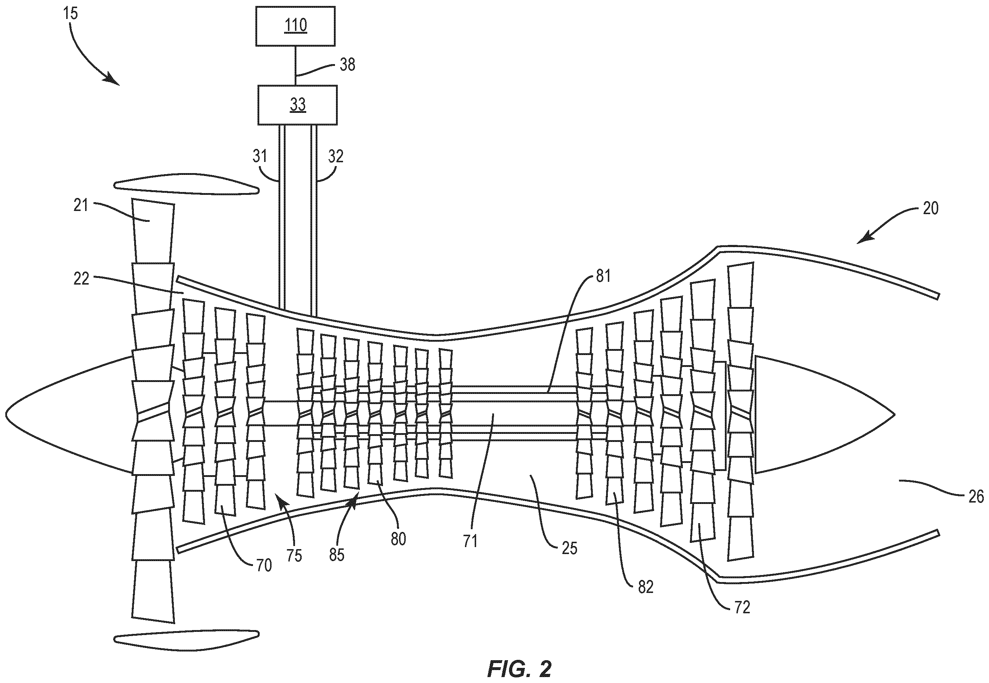

The engines 20 provide thrust to propel the aircraft. Figure 2 illustrates a schematic diagram of a turbine engine 20. The turbine engine 20 includes a fan 21 that draws air into a fan duct or compressor intake section and into a compressor 22. The compressor 22 includes one or more compressor sections. In some examples as illustrated in Figure 2, the compressor 22 is a dual-axial compressor 22 that includes a low pressure compressor 70 and a high pressure compressor 80. In some examples, the low pressure compressor 70 and the high pressure compressor 80 include various compressor stages that progressively increase the pressure of the air as the air flows from an input section at the fan 21 to a combustion chamber 25.

The low pressure compressor 70 is operatively coupled to a low pressure shaft 71 (referred to as the N1 shaft) and the high pressure compressor 80 is operatively coupled to a high pressure shaft 81 (referred to as the N2 shaft). The low pressure shaft 71 is further coupled to a low-pressure turbine 72 and the high pressure shaft 81 is coupled to a high-pressure turbine 82. In this example, the compressor 22 is a dual-axial compressor that includes the two compressors 70, 80. However, in other examples, the compressor 22 may include more compressor sections, each having, for example, a turbine and respective shaft.

After exiting the high pressure compressor 80, the highly pressurized air is provided to a combustion chamber 25 where fuel is injected and mixed with the highly pressure air and ignited. The high energy airflow exiting the combustion chamber 25 turns blades of the turbines 72, 82 which are coupled to respective ones of the shafts 71, 81. Rotation of the shafts 71, 81 turns the blades of the compressors 70, 80. The heated air is exhausted via a nozzle 26 where it mixes with cool air, provided by the fan 21 that bypasses the engine core to produce forward thrust.

The low pressure components including the low pressure compressor 70, low pressure shaft 71, and low pressure turbine 72 form a low pressure spool 75 (N1 spool). The high pressure components including the high pressure compressor 80, high pressure shaft 81, and high pressure turbine 82 form a high pressure spool 85 (N2 spool). In some examples as illustrated in Figure 2, the shafts 71, 81 are colinearly aligned with the first shaft 71 positioned within an interior of the second shaft 81.

A transfer assembly 15 is operatively connected to the low pressure spool 75 (N1 spool) and the high pressure spool 85 (N2 spool). In some examples, the transfer assembly 15 is connected to the shafts 71, 81 of the respective N1 and N2 spools. The transfer assembly 15 includes a differential 33, a low pressure drive mechanism 31, and a high pressure drive mechanism 32. The transfer assembly 15 transfers mechanical power to and from the turbine engine 20. The transfer assembly 15 also includes a drive mechanism 38 that connects the differential 33 to an accessory 110. The accessory 110 provides for various functions within the aircraft 100. Examples of accessories 110 include but are not limited to generators, friction brake, water brake, hydraulic motor/pumps, turbine air generator, torque converter, fuel pump, cooling fan, starter motor, and various combinations of two or more of these components. One specific example of an accessory 110 is a compressor that supplies air to an environmental control system.

The transfer assembly 15 transfers power between the components in different manners depending on the operation of the aircraft 100. During some operations, the transfer assembly 15 transfers power from the engine 20 to the accessory 110. In other operations, the transfer assembly 15 transfer power from the accessory 110 to the engine 20. Further, the transfer assembly 15 is configured to transfer power between the low pressure spool 75 and the high pressure spool 85.

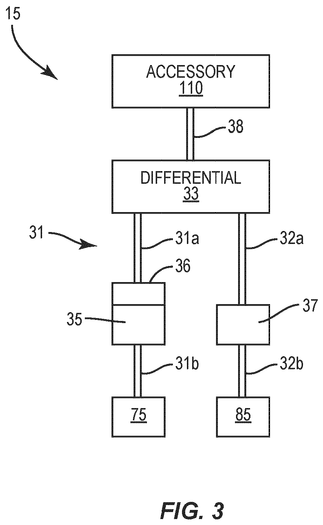

Figure 3 illustrates a transfer assembly 15 configured to transfer mechanical power when operating in the different operational modes. The differential 33 includes a gearbox that enables power to transfer in the different operational modes. The low pressure drive mechanism 31 is connected to the differential 33 and the low pressure spool 75 (N1 spool). The high pressure drive mechanism 32 is connected to the differential 33 and the high pressure spool 85 (N2 spool).

In some examples, the low pressure drive mechanism 31 includes one or more shafts. In multi-shaft arrangements, one of more transmission members such as clutches and gearboxes connect the different shafts together. Figure 3 illustrates an example in which the low pressure drive mechanism 31 includes a gearbox 35 between two shaft sections 31a, 31b. The gearbox 35 comprises a gear arrangement that implements a gear ratio between the shaft sections 31a, 31b. The gearbox 35 can include various configurations, including having a fixed gear ratio and a variable gear ratio. Further, the gearbox 35 can have different transmissions including but not limited to a multi-speed transmission or a continuously variable transmission.

In some examples, the low pressure drive mechanism 31 includes a clutch 36, such as a one-way clutch 36. Examples of clutches 36 include but are not limited to a sprag clutch and a roller clutch. The clutch 36 is a one-way clutch that allows rotation in one direction but not the reverse direction. In some examples, the gearbox 35 provides a negative (reverse) gear ratio between the N1 spool 75 and the differential 33. The one-way clutch 36 limits or prevents the differential 33 from driving the N1 spool 75 during one or more operational modes. In some examples, the clutch 36 is an active clutch that physically disconnects or separates the shafts 31a, 31b.

The high pressure drive mechanism 32 can also include various configurations. In some examples, the high pressure drive mechanism 32 includes a single shaft that extends between the high pressure shaft 81 and the differential 33. In other examples, the high pressure drive mechanism 32 includes two or more sections that can move relative to one another. Figure 3 includes an example with the high pressure drive mechanism 32 having sections 32a, 32b on opposing sides of a gearbox 37. Section 32a is coupled to the differential 33 and gearbox 37, and section 32a is coupled to the N2 spool 85. The gearbox 37 implements a gear ratio between the differential 33 and the N2 spool 85. The gearbox 37 can include various configurations, including but not limited to a fixed gear ratio, and a variable gear ratio gearbox. In some examples, the gearbox 37 has a multi-speed transmission or a continuously variable transmission. In some examples, the high pressure drive mechanism 32 includes a clutch.

The example of Figure 3 includes each of the lower pressure drive mechanism 31 and high pressure drive mechanism 32 with a single gearbox. In other examples, one or both include multiple gearboxes.

The transfer assembly 15 includes the drive mechanism 38 that operatively connects the differential 33 to the accessory 110. Figure 3 includes the drive mechanism 38 as a single shaft, although other examples can include the drive mechanism 38 formed by two or more sections. The drive mechanism 38 can also include one or more of a gearbox and clutch.

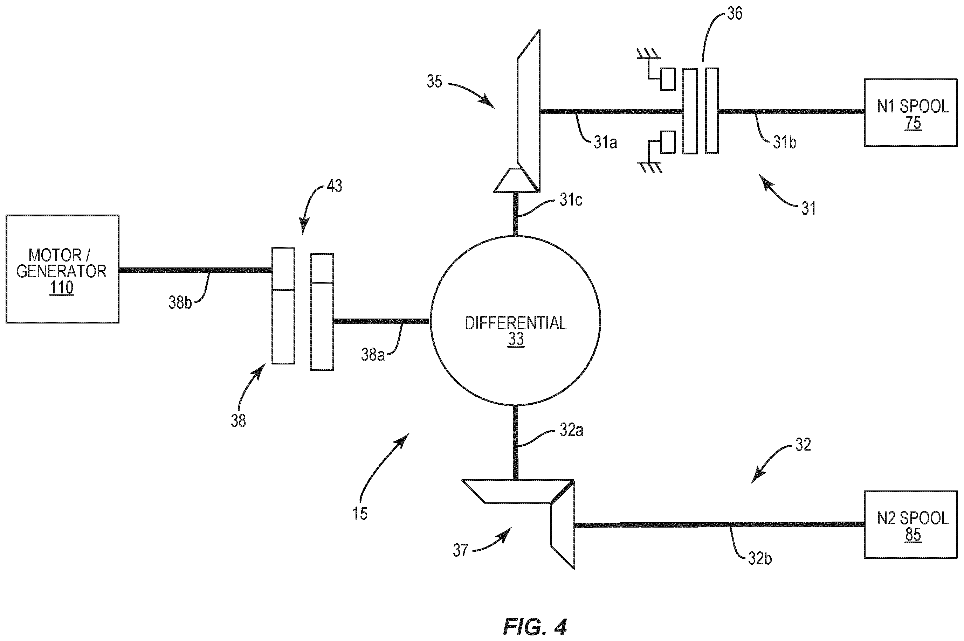

Figure 4 illustrates an example of the transfer assembly 15 that interconnects and enables power transfer between the N1 spool 75, the N2 spool 75, and the accessory 110. In this example, the accessory 110 is a motor/generator and the transfer assembly 15 enables the motor/generator 110 to operate as both an input and an output of power. The transfer assembly 15 is configured to operate during different modes of aircraft operation. In some examples, the different modes include an engine start, a generator drive power, and power transfer.

In the example of Figure 4, the low pressure drive mechanism 31 includes shafts 31a, 31b, 31c. A gearbox 35 is positioned on the low pressure drive mechanism 31 between the differential 33 and the N1 spool 75. The gearbox 35 provides a gear ratio that can vary depending upon the mode of operation. The gear ratio can vary and can be positive or negative. A clutch 36 is positioned on the low pressure drive mechanism 31. In some examples, clutch 36 is a two-way clutch. Examples of the functioning of the clutch 36 include but are not limited to connecting shaft 31a to shaft 31b, disconnecting shaft 31a from shaft 31b, and disconnecting shaft 31a from shaft 31b and braking shaft 31a.

The high pressure drive mechanism 32 comprises one or more sections and extends between the differential 33 and the N2 spool 85. A gearbox 37 is configured to provide a gear ratio that can be positive or negative.

The gear ratios of the low pressure drive mechanism 31 and the high pressure drive mechanism 32 can vary. In some examples, the gear ratio of one drive mechanism 31, 32 is positive and the gear ratio of the other drive mechanism 31, 32 is negative. In one example, the low pressure drive mechanism 31 includes a negative gear ratio and the high pressure drive mechanism 32 includes a positive gear ratio. In other examples, the gear ratios are the same (e.g., both positive or both negative). In some examples, one or both are configured with multiple gear ratios.

The drive mechanism 38 includes a first shaft 38a and a second shaft 38b. A gearbox 43 is positioned between the shafts 38a, 38b. The gearbox 43 operates at one or more positive and/or negative gear ratios. In one example, the gearbox 43 operates at two positive gear ratios.

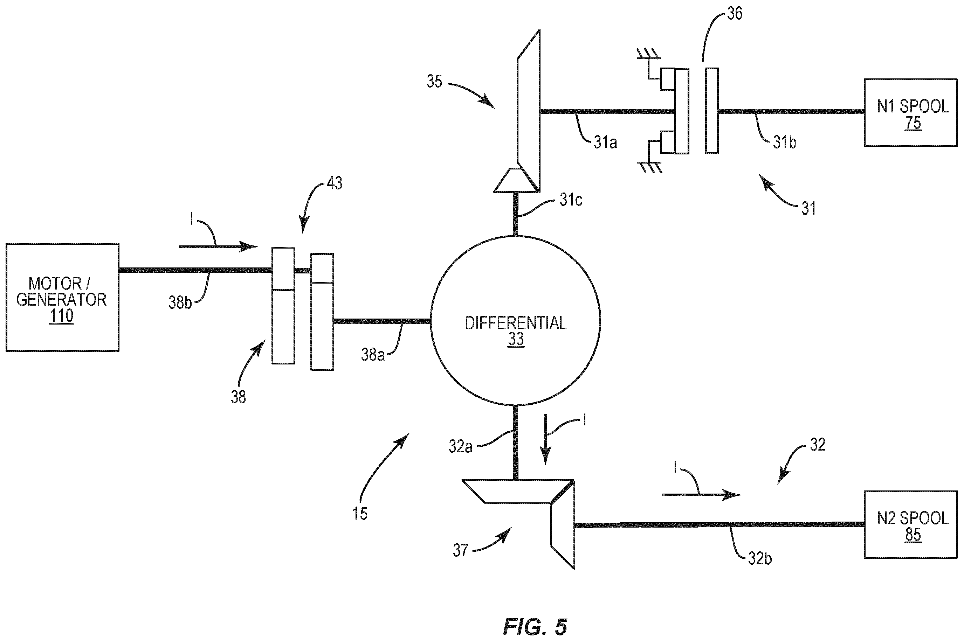

Figure 5 illustrates the transfer assembly 15 in a first mode of operation in which the accessory 110 inputs power in the direction of arrows I to the engine 20. In some examples, this occurs during engine start in which power is supplied from a motor/generator 110 to the high pressure spool 85. In this example, the motor/generator 110 supplies 150 horsepower to rotate the shaft 38b at 20,013 rpm. The gearbox 43 has a gear ratio of 0.158 and drives shaft 38a at 3,162 rpm. The low pressure drive mechanism 31a is braked by the clutch 36 to enable the power to be transferred to the N2 spool 85. The differential 33 has a gear ratio of 2.0 between drive mechanism 38a and high pressure drive mechanism 32a when low pressure drive mechanism 31a is braked and applies the power input to the high pressure drive mechanism 32. Gearbox 37 has a gear ratio of 0.9 that results in the shaft section 32a being rotated at 7,025 rpm to drive the high pressure spool 85.

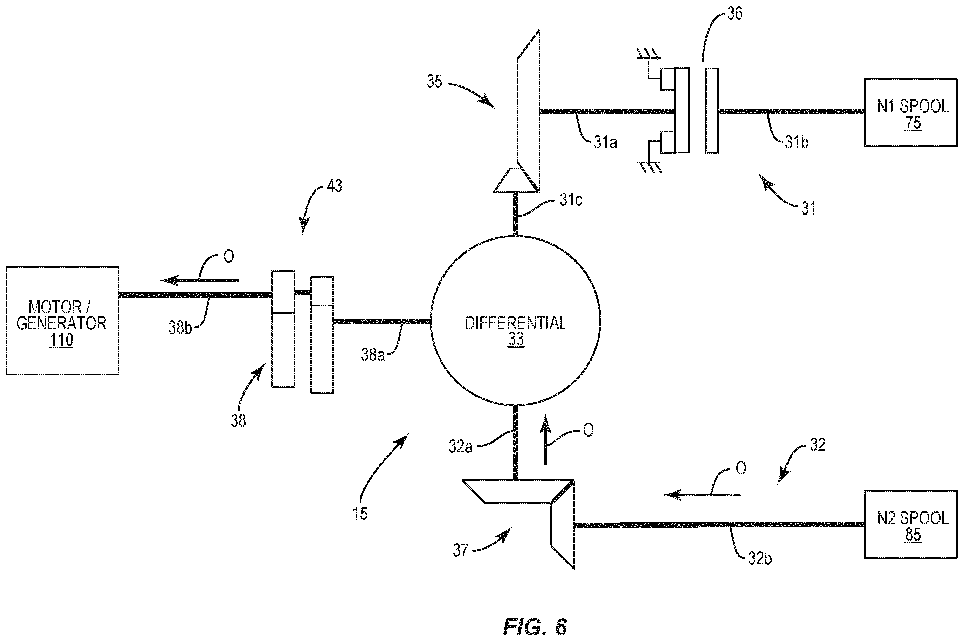

Figure 6 illustrates a second mode of operation that outputs power in the direction of arrows O to transfer power from the engine 20 to the accessory 110. In some examples, this can occur during any phase of the aircraft 100 in which power from the N2 spool 85 is transferred to assist with running the aircraft system. In this example, power from the high pressure shaft 81 rotates the shaft section 32b of the high pressure drive mechanism 32 at 12,000 rpm with 89 horsepower. The gearbox 37 with a gear ratio of 0.9 supplies the horsepower to the differential 33 at 10,080 rpm. The low pressure drive mechanism 31a is braked by the clutch 36resulting in differential having a gear ratio of 2.0. The input power through the differential 33 drives shaft 38a at 5400 rpm. Gearbox 43 has a ratio of 0.526 and rotates shaft 38b at 10,266 rpm to transfer the horsepower to the motor/generator 110.

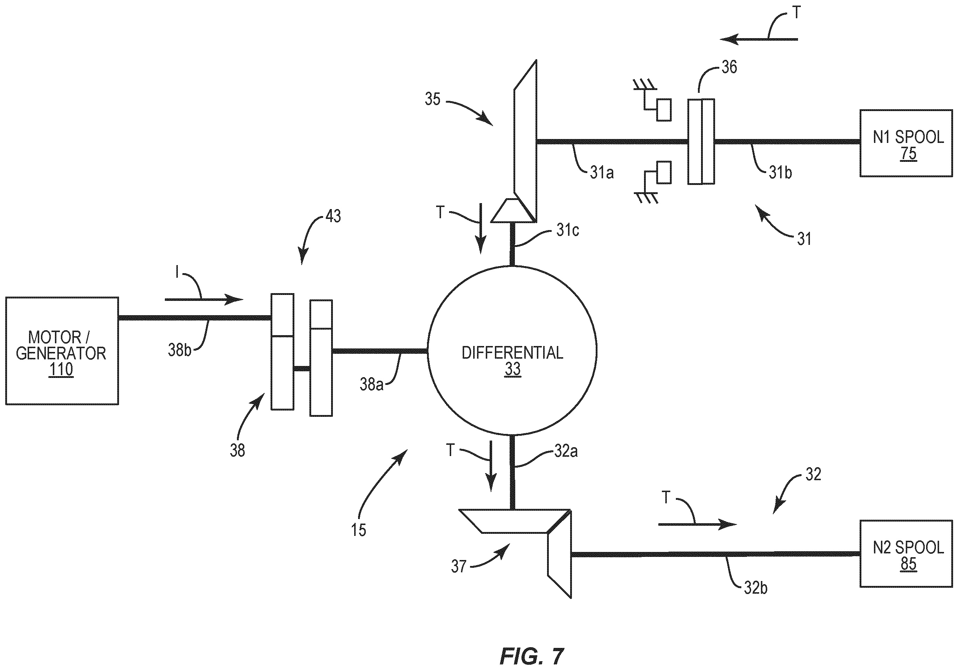

Figure 7 illustrates a third mode of operation in which power is transferred in the direction of arrows T within the engine 20. In the example of Figure 7, power is transferred from the N1 spool 75 to the N2 spool 85. In some examples, the assembly includes positive and negative gear ratios.

In one specific example, the N1 spool 75 provides 170 horsepower and rotates shaft 31b at 1,260 rpm. Clutch 36 is connected and enables the shaft 31b is rotated at 1,260 rpm. Gearbox 35 has a gear ratio of -10 and drives section 31c at -12,600 rpm. The differential 33 has a gear ratio of substantially -1.0 and the shaft section 32a is rotated at 12,717 rpm. Gearbox 37 has a gear ratio of 0.9 and drives the shaft section 32a at 14,130 rpm to drive the N2 spool 85.

In some examples, the third mode of operation as illustrated in Figure 7 occurs when the engine 20 is producing excess thrust that can be harvested from the N1 spool 75 to power the N2 spool 85. One example occurs during a ground idle mode of operation of the aircraft 100. During ground idle, the fan 21 consumes any excess horsepower created by the N1 turbine 72. This excess horsepower results in higher than desired ground idle thrust and fuel flow. Transferring power between the N1 and N2 spools 75, 85 allows for some of the excess power created by the N1 turbine 72 to be used by the N2 spool 85 thus reducing ground idle thrust and fuel flow. As illustrated in Figure 7, mechanical power from excess available power on the N1 spool 75 is directed back into the N2 spool 85 allowing a required speed of the N2 spool 85 to be maintained, but with reduced fuel flow. Further, extracting power from the N1 spool 75 reduces the rotational speed of the N1 spool 75 which in turn reduces the rotational speed of the fan 21. Thus, unwanted fan thrust is reduced. As a result, beneficially, at idle both thrust of the turbine engine 20 and fuel flow are reduced

In the example of Figure 7, motor/generator 110 supplies a relatively small amount of power (e.g., 2 horsepower) through the drive mechanism 38. The motor/generator 110 drives shaft 38b at 370 rpm and gearbox 43 has a gear ratio of 0.158 to drive shaft 38a at 58.5 rpm which is input to the differential 33.

In some examples, another mode of operation includes power transferring from the N1 spool 75 to the accessory 110. The low pressure spool 75 drives shaft 31b. Clutch 36 is engaged which transfers the power to shaft 31a, gearbox 35 and shaft 31c to the differential 33. The differential 33 transfers the horsepower to the shaft 38a, gearbox 43, and shaft 38b to drive the accessory 110. In some examples, high pressure drive mechanism 32 is braked to enable more efficient transfer to the drive mechanism 38. In other examples, high pressure drive mechanism 32 is not braked. In some examples, this mode of operation that transfers power from the lower pressure spool 75 to the accessory 110 occurs during an engine out windmill condition.

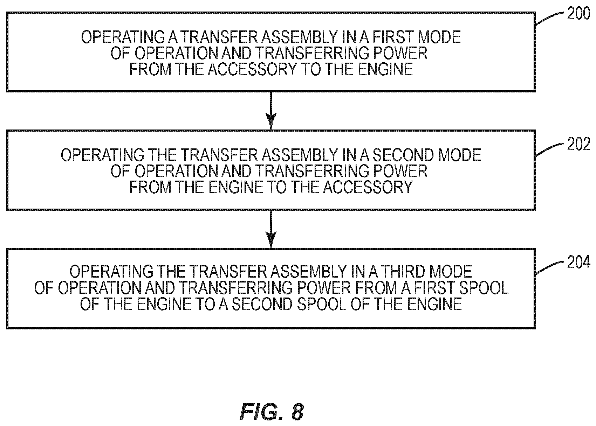

Figure 8 illustrates a method of transferring power between an engine 20 and an accessory 110. The transfer assembly 15 is in a first mode of operation and transfers power from the accessory 110 to the engine 20 (block 200). In some examples, this occurs when starting the engine 20. The transfer assembly 15 operates in a second mode of operation and transfers power from the engine 20 to the accessory 110 (block 202). In some examples, this occurs during normal ground idle with no power transfer within the engine 20 and during a cruise mode of flight. The transfer assembly 15 operates in a third mode of operation and transfers power from a first spool N1 of the engine 20 to a second spool N2 of the engine 20 (block 204). In some examples, this occurs during a power transfer mode.

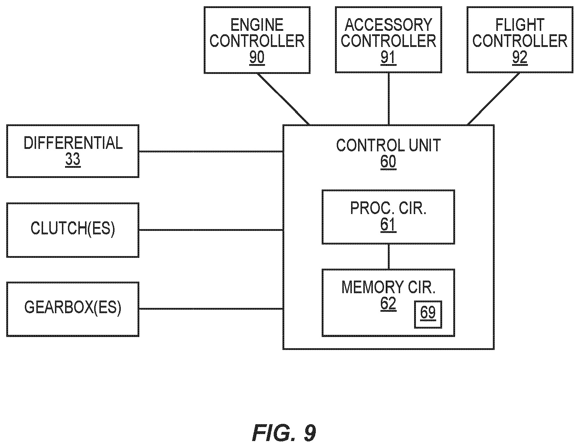

Figure 9 illustrates a control unit 60 configured to control the operation of the transfer assembly 15. In some examples, the control unit 60 is an independent device dedicated to the transfer assembly 15. In other examples, the control unit 60 is part of system that oversees addition functionality of the aircraft 100 such as but not limited to an engine controller 90 and a flight controller 92. The control unit 60 can include one or more of each of a number of components such as, for example, processing circuitry 61 (e.g., processor unit) connected to a memory circuitry 62 (e.g., storage device).

In some examples, the processing circuitry 61 is composed of one or more processors alone or in combination with one or more memories. The processing circuitry 61 is generally computer hardware that is capable of processing information such as, for example, data, computer programs and/or other suitable electronic information. The processing circuitry 61 is composed of a collection of electronic circuits some of which may be packaged as an integrated circuit or multiple interconnected integrated circuits (an integrated circuit at times more commonly referred to as a "chip"). The processing circuitry 61 may be configured to execute computer program instructions 69 to perform the various power transfer functions. The computer programs 69 can be stored within the memory circuity 62 of the control unit 60 or otherwise stored at another accessible location (e.g., memory circuitry of engine controller 90).

The processing circuitry 61 may be a number of processors, a multi-core processor or some other type of processor, depending on the particular implementation. Further, the processing circuitry 61 may be implemented using a number of heterogeneous processor systems in which a main processor is present with one or more secondary processors on a single chip. As another illustrative example, the processing circuitry 61 may be a symmetric multi-processor system containing multiple processors of the same type. In yet another example, the processing circuitry 61 may be embodied as or otherwise include one or more ASICs, FPGAs or the like. Thus, although the processing circuitry 61 may be capable of executing a computer program 69 to perform one or more functions, the processing circuitry 61 of various examples may be capable of performing one or more functions without the aid of a computer program. In either instance, the processing circuitry 61 may be appropriately programmed to perform functions or operations according to example implementations of the present disclosure.

The memory circuitry 62 is generally computer hardware that is capable of storing information such as, for example, data, computer programs (e.g., computer-readable program code) and/or other suitable information either on a temporary basis and/or a permanent basis. The memory circuitry 62 may include volatile and/or non-volatile memory and may be fixed or removable. Examples of suitable memory circuitry 62 include random access memory (RAM), read-only memory (ROM), a hard drive, a flash memory, a thumb drive, a removable computer diskette, an optical disk, a magnetic tape or some combination of the above. Optical disks may include compact disk-read only memory (CD-ROM), compact disk-read/write (CD-R/W), DVD or the like. In various instances, the memory circuitry 62 may be referred to as a computer-readable storage medium. The computer-readable storage medium is a non-transitory device capable of storing information and is distinguishable from computer-readable transmission media such as electronic transitory signals capable of carrying information from one location to another. Computer-readable medium as described herein may generally refer to a computer-readable storage medium or computer-readable transmission medium.

Control unit 60 also includes communications circuitry 63 configured to transmit and/or receive information, such as to and/or from the sources onboard the aircraft 100 such as but not limited to an engine controller 90, accessory control 91, and flight controller 92. In some examples, the communications circuitry 63 is configured to transmit data from the aircraft 100, either directly or through the communications functionality onboard the aircraft 100. The communications circuitry 63 may be configured to transmit and/or receive information by physical (wired) and/or wireless communications links. The communications circuitry 63 may have one or more transmitters and/or receivers.

In some examples, the control unit 60 receives inputs regarding the operation of the engine 20 and/or accessory 110. Inputs can be received from one or more of an engine controller 90 that controls the operation of the engine 20, an accessory controller 91 that controls the operation of the accessory 110 and/or associated system (e.g., environmental control system), and a flight controller 92 that oversees the operation of the aircraft 100. Based on the inputs, the control unit 60 operates the transfer assembly 15 to meet the demands. The control unit 60 sets the operation of the various components of the transfer assembly 15 such as the differential 33, one or more clutches, and one or more gearboxes.

In some examples, the control unit 60 is an independent unit that functions to just control the operation of the transfer assembly 15. In other examples, the control unit 60 is incorporated into one or more other systems onboard the aircraft 100. In some examples, the control unit 60 is incorporated with the engine controller 90 that controls the operation of the engine 20. In some examples, the control unit 60 is incorporated with an accessory controller 91 that controls the operation of the accessory 110. In some examples, the control unit 60 is incorporated with the flight controller 92 that oversees operation of the aircraft 100.

A similar transfer assembly 15 can be implemented in connection with one or more additional engines 20 of the aircraft 100. For example, an aircraft 100 with two engines 20 includes two of the transfer assemblies 15 implemented on the aircraft 100. The example transfer assembly 15 is only described in connection with the first engine 20, however, it is understood that any of the example aspects disclosed in connection with the first engine 20 can likewise apply to the second engine 20.

While in this example the first engine 20 is implemented as a turbofan engine, the example system 200 can be similarly implemented in connection with other types of engines, such as but not limited to a turboshaft engine, a turbo-prop engine, a turbo-jet engine, and an open-rotor engine.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

Spatially relative terms such as "under", "below", "lower", "over", "upper", and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

Further examples are set out in the clauses below:
1. A transfer assembly to transfer power within an aircraft between a low pressure spool of an engine, a high pressure spool of an engine, and an accessory, the transfer assembly comprising:
   a low pressure drive mechanism operatively connected to the low pressure spool;
   a high pressure drive mechanism operatively connected to the high pressure spool;
   an accessory drive mechanism operatively connected to the accessory;
   a differential operatively connected to each of the low pressure drive mechanism, the high pressure drive mechanism, and the accessory drive mechanism; and
   wherein the differential is configured to operate in a first mode, a second mode, and a third mode with the first mode configured to transfer power from the accessory to one of the low pressure spool and the high pressure spool, the second mode configured to transfer power from one of the low pressure spool and the high pressure spool to the accessory, and the third mode configured to transfer power from the low pressure spool to the high pressure spool.
2. The transfer assembly of clause 1, further comprising a clutch positioned along the low pressure drive mechanism, the clutch configured to disconnect the low pressure drive mechanism and brake the differential during the first mode and the second mode.
3. The transfer assembly of clause 2, wherein the low pressure drive mechanism comprises the clutch positioned between a first shaft of the low pressure drive mechanism and a second shaft of the low pressure drive mechanism.
4. The transfer assembly of any one of the preceding clauses, wherein the accessory drive mechanism comprises a gearbox configured to operate with a first gear ratio in the first mode and a second gear ratio in the second mode with the first gear ratio being different than the second gear ratio.
5. The transfer assembly of clause 4, wherein the accessory drive mechanism comprises a first shaft that extends between the differential and a gearbox and a second shaft that extends between the differential and the accessory, wherein the first shaft and the second shaft are configured to rotate at different speeds.
6. The transfer assembly of any one of the preceding clauses, wherein the differential is configured to operate with different gear ratios between two of the first mode, the second mode, and the third mode. any one of the preceding clauses
7. The transfer assembly of any one of the preceding clauses, further comprising a control unit that receives inputs regarding operation of the transfer assembly and controls an operation of the differential.
8. The transfer assembly of any one of the preceding clauses, wherein each of the low pressure drive mechanism and the high pressure drive mechanism comprises a shaft with one or more sections.
9. The transfer assembly of any one of the preceding clauses, wherein one of the low pressure drive mechanism and the high pressure drive mechanism comprises a positive gear ratio with the differential and the other comprises a negative gear ratio with the differential.
10. The transfer assembly of any one of the preceding clauses, in the first mode the power is transferred from the accessory to the high pressure spool and in the second mode the power is transferred from the high pressure spool to the accessory.
11. The transfer assembly of any one of the preceding clauses, wherein the engine is one of a turbofan engine, a turboshaft engine, and an open rotor engine.
12. A transfer assembly to transfer power within an aircraft between an accessory and an engine, the transfer assembly comprising:
   a differential;
   a first drive shaft connected to the differential with a first gear ratio and configured to connect to a first spool of the engine;
   a second drive shaft connected to the differential with a second gear ratio and configured to connect to a second spool of the engine;
   a third drive shaft connected to the differential and configured to connect to the accessory; and
   wherein the differential is configured to transfer power from the third drive shaft to one of the first drive shaft and the second drive shaft, and to transfer power from one of the first drive shaft and the second drive shaft to the third drive shaft.
13. The transfer assembly of clause 12, wherein the first drive shaft comprises:
   a first drive shaft section;
   a second drive shaft section; and
   a clutch operatively connected to each of the first drive shaft section and the second drive shaft section.
14. The transfer assembly of clause 13, wherein the clutch is configured to operate in one of three manners comprising:
   a connected mode to connect the first drive shaft section and the second drive shaft section;
   a neutral mode to enable the first drive shaft section and the second drive shaft section to rotate independently; or
   a braked mode to prevent rotation of the first drive shaft section and the second drive shaft section.
15. The transfer assembly of any one of clauses 12-14, wherein each of the first drive shaft, the second drive shaft and the third drive shaft operate at different gear ratios.
16. The transfer assembly of any one of clauses 12,-15 wherein the differential is further configured to transfer power from the first drive shaft to the second drive shaft.
17. A method of transferring power between an engine and an accessory of an aircraft, the method comprising:
   operating a transfer assembly in a first mode of operation and transferring power from the accessory that is away from the transfer assembly to the engine;
   operating the transfer assembly in a second mode of operation and transferring power from the engine to the accessory; and
   operating the transfer assembly in a third mode of operation and transferring power from a first spool of the engine to a second spool of the engine.
18. The method of clause 17, wherein the first spool of the engine comprises a low pressure spool and the second spool of the engine comprises a high pressure spool and the first mode of operation comprises transferring the power from the accessory to the high pressure spool.
19. The method of clause 18, wherein the second mode of operation comprises transferring the power from the high pressure spool of the engine to the accessory.
20. The method of clause 18, further comprising disconnecting a drive mechanism to the low pressure spool and braking a differential in the first mode of operation and the second mode of operation.

The present examples may, of course, be carried out in other ways than those specifically set forth herein. The present examples are to be considered in all respects as illustrative and not restrictive, and all changes coming within the meaning and equivalency range of the appended claims are intended to be embraced therein.

## Claims

1. A transfer assembly to transfer power within an aircraft between a low pressure spool (75) of an engine (20), a high pressure spool (85) of an engine (20), and an accessory (110), the transfer assembly comprising:
a low pressure drive mechanism (31) operatively connected to the low pressure spool (75);
a high pressure drive mechanism (32) operatively connected to the high pressure spool (85);
an accessory drive mechanism (38) operatively connected to the accessory (110);
a differential (33) operatively connected to each of the low pressure drive mechanism (31), the high pressure drive mechanism (32), and the accessory drive mechanism (38); and
wherein the differential (33) is configured to operate in a first mode, a second mode, and a third mode with the first mode configured to transfer power from the accessory (110) to one of the low pressure spool (75) and the high pressure spool (85), the second mode configured to transfer power from one of the low pressure spool (75) and the high pressure spool (85) to the accessory (110), and the third mode configured to transfer power from the low pressure spool (75) to the high pressure spool (85).

2. The transfer assembly of claim 1, further comprising a clutch (36) positioned along the low pressure drive mechanism (31), the clutch (36) configured to disconnect the low pressure drive mechanism (31) and brake the differential (33) during the first mode and the second mode.

3. The transfer assembly of claim 2, wherein the low pressure drive mechanism (31) comprises the clutch (36) positioned between a first shaft (31a) of the low pressure drive mechanism (31) and a second shaft (31b) of the low pressure drive mechanism (31).

4. The transfer assembly of any one of the preceding claims, wherein the accessory drive mechanism (38) comprises a gearbox (43) configured to operate with a first gear ratio in the first mode and a second gear ratio in the second mode with the first gear ratio being different than the second gear ratio.

5. The transfer assembly of claim 4, wherein the accessory drive mechanism (38) comprises a first shaft (38a) that extends between the differential (33) and a gearbox (43) and a second shaft (38b) that extends between the differential (33) and the accessory (110), wherein the first shaft (38a) and the second shaft (38b) are configured to rotate at different speeds.

6. The transfer assembly of any one of the preceding claims, wherein the differential (33) is configured to operate with different gear ratios between two of the first mode, the second mode, and the third mode.

7. The transfer assembly of any one of the preceding claims, further comprising a control unit (60) that receives inputs regarding operation of the transfer assembly and controls an operation of the differential (33).

8. The transfer assembly of any one of the preceding claims, wherein each of the low pressure drive mechanism (31) and the high pressure drive mechanism comprises a shaft with one or more sections.

9. The transfer assembly of any one of the preceding claims, wherein one of the low pressure drive mechanism (31) and the high pressure drive mechanism (32) comprises a positive gear ratio with the differential (33) and the other comprises a negative gear ratio with the differential (33).

10. The transfer assembly of any one of the preceding claims, in the first mode the power is transferred from the accessory (110) to the high pressure spool (85) and in the second mode the power is transferred from the high pressure spool (85) to the accessory; or optionally
wherein the engine (20) is one of a turbofan engine, a turboshaft engine, and an open rotor engine.

11. A transfer assembly to transfer power within an aircraft between an accessory (110) and an engine (20), the transfer assembly comprising:
a differential (33);
a first drive shaft (31) connected to the differential (33) with a first gear ratio and configured to connect to a first spool of the engine (20);
a second drive shaft (32) connected to the differential (33) with a second gear ratio and configured to connect to a second spool of the engine (20);
a third drive shaft (38) connected to the differential (33) and configured to connect to the accessory (33); and
wherein the differential (33) is configured to transfer power from the third drive shaft (38) to one of the first drive shaft (31) and the second drive shaft (32), and to transfer power from one of the first drive shaft (31) and the second drive shaft (32) to the third drive shaft (38).

12. The transfer assembly of claim 11, wherein the first drive shaft comprises:
a first drive shaft section (31a);
a second drive shaft section (31b); and
a clutch (36) operatively connected to each of the first drive shaft section 31a and the second drive shaft section (31b); and optionally
wherein the clutch (36) is configured to operate in one of three manners comprising:
a connected mode to connect the first drive shaft section (31a) and the second drive shaft section (31b);
a neutral mode to enable the first drive shaft section (31a) and the second drive shaft section (31b) to rotate independently; or
a braked mode to prevent rotation of the first drive shaft section (31a) and the second drive shaft section (31b).1

13. The transfer assembly of claim 11, wherein each of the first drive shaft (31), the second drive shaft (32) and the third drive shaft (38) operate at different gear ratios; or optionally wherein the differential (33) is further configured to transfer power from the first drive shaft (31) to the second drive shaft (32).

14. A method of transferring power between an engine (20) and an accessory (110) of an aircraft, the method comprising:
operating a transfer assembly (15) in a first mode of operation and transferring power from the accessory (110) that is away from the transfer assembly (15) to the engine (20);
operating the transfer assembly (15) in a second mode of operation and transferring power from the engine (20) to the accessory (110); and
operating the transfer assembly (15) in a third mode of operation and transferring power from a first spool of the engine (20) to a second spool of the engine (20).

15. The method of claim 14, wherein the first spool of the engine (20) comprises a low pressure spool (75) and the second spool of the engine (20) comprises a high pressure spool (85) and the first mode of operation comprises transferring the power from the accessory (110) to the high pressure spool (85); and optionally
wherein the second mode of operation comprises transferring the power from the high pressure spool (85) of the engine (20) to the accessory (110); or optionally
further comprising disconnecting a drive mechanism (31) to the low pressure spool (75) and braking a differential (33) in the first mode of operation and the second mode of operation.
